# EUROPÄISCHE PATENTSCHRIFT

(11) **EP 0 606 823 B1**
(45) Veröffentlichungstag und Bekanntmachung des Hinweises auf die Patenterteilung: **12.06.1996**
(21) Anmeldenummer: 93810902.2
(22) Anmeldetag: 23.12.1993
(51) Int. Cl.: E03B 7/07, C02F 9/00, C02F 1/42

(54) **Flüssigkeitsaufbereitungsanlage**
Liquid treatment plant
Installation de traitement de liquide

(30) Priorität: 13.01.1993 DE 4300585
(43) Veröffentlichungstag der Anmeldung: 20.07.1994
(73) Patentinhaber: Schenk, Rudolf, CH-5035 Unterentfelden (CH)
(72) Erfinder: Schenk, Rudolf, CH-5035 Unterentfelden (CH)
(74) Vertreter: Rottmann, Maximilian R.

(56) Entgegenhaltungen:
- WO-A-93/00168
- US-A- 2 973 001

## Beschreibung

Die Erfindung betrifft eine Flüssigkeitsaufbereitungsanlage gemäss dem Anspruch 1.

Als Geräte zum Aufbereiten von Flüssigkeiten, insbesondere auch von Wasser, können beispielsweise Enthärtungsgeräte, Entkeimungsgeräte und Filtriergeräte zum Einsatz kommen. Ebenso sind Geräte zur Anreicherung von Flüssigkeiten mit Zusatzstoffen, beispielsweise zur Anreicherung von Wasser mit Mineralien, bekannt. Zum Aufbereiten von Wasser für spezifische Anwendungen ist noch eine Vielzahl von weiteren Geräten bzw. Verfahren bekannt (Aufbereitung des Wassers für Bierbrauereien, Ozonisierung des Wassers usw.).

Eine prinzipielle Problematik bei der Aufbereitung bzw. Behandlung von Flüssigkeiten besteht in Anlagen mit zeitlich stark schwankendem Flüssigkeitsverbrauch, wie dies insbesondere auch bei Hauswasseranlagen der Fall ist. Anhand eines Beispieles soll das Enthärten von Wasser durch zumindest teilweise Deaktivierung des im Wasser vorhandenen Kalks geschildert werden. Ziel einer solchen Enthärtung ist im allgemeinen, zu verhindern, dass sich einerseits Kalkstein an den Wänden der Wasserleitungsrohre sowie insbesondere auch im Boiler ansetzt, und dass andererseits auch angeschlossene Haushaltsgeräte weniger Kalk ansetzen. Gattungsgemässe Enthärtungsgeräte werden inzwischen häufig auch in Hauswasseranlagen als lokal werden inzwischen häufig auch in Hauswasseranlagen als lokal wirkende Geräte eingesetzt, welche im allgemeinen unter dem Begriff Entkalkungsgeräte bekannt sind. Ein solches Entkalkungsgerät ist auf einen bestimmten Nenndurchsatz ausgelegt und wird üblicherweise in die Hauptwasserzuleitung eingeschaltet.

Bei Nenndurchsatz wird das Entkalkungsgerät vom Wasser mit einer bestimmten Geschwindigkeit durchflossen. Um einen guten Wirkungsgrad zu erzielen, sollte diese Geschwindigkeit möglichst genau eingehalten werden, da insbesondere bei wesentlich tieferen oder höheren Durchflussgeschwindigkeiten des Wassers durch das Entkalkungsgerät der Wirkungsgrad stark reduziert wird. Damit im Entkalkungsgerät jedoch kein grosser Druckabfall bei hohem bis maximalem Wasserverbrauch entsteht, muss der Nenndurchsatz des Geräts nahe an dem höchst möglichen Durchsatz -maximaler Wasserverbrauch- liegen. Eine solche Auslegung des Entkalkungsgeräts bedeutet jedoch, dass dieses während der meisten Zeit von einer Wassermenge durchflossen wird, die nur einem Bruchteil des Nenndurchsatzes entspricht, da in Haushaltungen sehr oft nur wenige Wasser-Verbraucher gleichzeitig eingeschaltet sind. Das bedeutet also, dass die Durchflussgeschwindigkeit des Wassers durch das Entkalkungsgerät, während eines Grossteils der Zeit, weit unter der Nenn-Durchflussgeschwindigkeit liegt und das Entkalkungsgerät somit während der meisten Zeit mit einem sehr schlechten Wirkungsgrad arbeitet, der Deaktivierungsgrad des im Wassers vorhandenen Kalks damit weit unter dem Möglichen bzw. den Erwartungen liegt. Dieselbe Problematik tritt in analoger Form mehr oder weniger bei allen Formen der physikalischen oder chemischen Behandlung von Flüssigkeiten auf.

Bekannte Anlagen sehen zur Vermeidung der vorgängig geschilderten Nachteile oft eine Lösung vor, bei welcher dem Flüssigkeitsbehandlungsgerät ein elektronisches Durchflussmessgerät vor-\oder nachgeschaltet ist, das mit einer entsprechenden Auswerteeinheit verbunden ist, welche bei einem vorbestimmbaren Grenzwert ein entsprechendes Ventil, beispielsweise ein Magnetventil, öffnet oder schliesst. Solche Lösungen haben jedoch den Nachteil, dass eine elektrische Spannung in unmittelbarer Nähe der Flüssigkeit vorhanden ist. Da eine solche Anlage meist während Jahrzehnten betrieben wird, ohne dass sie regelmässig gewartet wird und zudem viele Flüssigkeiten und insbesondere auch Wasser elektrischen Strom relativ gut leiten, weisen solche Anlagen ein latentes, nicht zu unterschätzendes Gefahrenpotential auf. Ein weiterer Nachteil einer solchen Lösung ist darin zu sehen, dass diese sehr aufwendig und damit entsprechend teuer ist.

Aus der WO-A-9300168 ist eine programmierbare Kontrolleinrichtung zur Behandlung von Wasser bekannt, bei der mehrere Wasserbehandlungsgeräte parallel angeordnet sind. Jedes dieser Wasserbehandlungsgeräte weist einen in Reihe geschalteten, elektronischen Durchflussmengensensor sowie je ein elektrisch ansteuerbares Zweiwegventil auf. Die durch das jeweilige Wasserbehandlungsgerät fliessende Wassermenge wird vom jeweiligen Durchflussmengensensor erfasst und von der Kontrolleinrichtung ausgewertet. Aufgrund der ermittelten Werte werden die entsprechenden Flüssigkeitsbehandlungsgeräte, über die elektrisch ansteuerbaren Zweiwegventile, aktiviert bzw. deaktiviert. Die Verwendung von elektrischen bzw. elektronischen Komponenten bringt jedoch die vorgängig ausführlich geschilderten Nachteile mit sich. Zudem ist eine derartige Einrichtung teuer in der Herstellung und bringt einen erheblichen Installationsaufwand mit sich. Schliesslich müssen Vorkehrungen getroffen werden, damit die Einrichtung auch bei einem Stromausfall benutzbar ist, bzw. behandeltes Wasser zur Verfügung steht.

Es ist daher die Aufgabe der Erfindung, eine Flüssigkeitsaufbereitungsanlage vorzuschlagen, welche auf einfache Art und Weise Sicherstellt, dass das bzw die eingesetzte (n) Flüssigkeits behandlungsgerät (e), insbesondere auch bei zeitlich stark Schwankendem Flüssigkeitsverbrauch, mit einer Flüssigkeitsmenge beaufschlagt wird bzw. werden, die einen hohen Wirkungsgrad der Anlage während eines Grossteils der Betriebszeit gewährleistet.

Diese Aufgabe wird durch die im Anspruch 1 angegebenen Merkmale gelöst.

In einer bevorzugten Ausführung der Anlage sind mehrere parallel geschaltete Wasserbehandlungsgeräte vorgesehen, die unterschiedliche Nenngrössen aufweisen und somit für unterschiedliche Durchflussmengen ausgelegt sind. Durch eine solche Ausgestaltung kann die Anlage so abgestimmt werden, dass bei einem minimalen Flüssigkeitsbedarf ein Flüssigkeitsbehandlungsgerät mit sehr kleinem Querschnitt und bei maximalem Flüssigkeitsverbrauch alle Flüssigkeitsbehandlungsgeräte zugleich durchströmt werden. Bei einem mittleren Wasserverbrauch sind natürlich auch noch Zwischenstufen bezüglich der zugeschalteten und durchströmten Geräte möglich. Dadurch arbeitet eine solche Anmit sehr kleinem Querschnitt und bei maximalem Flüssigkeitsverbrauch alle Flüssigkeitsbehandlungsgeräte zugleich durchströmt werden. Bei einem mittleren Wasserverbrauch sind natürlich auch noch Zwischenstufen bezüglich der zugeschalteten und durchströmten Geräte möglich. Dadurch arbeitet eine solche Anlage immer nahe am besten Wirkungsgrad. Eine solchermassen ausgestaltete Anlage eignet sich insbesondere auch für Hauswasseranlagen, da in Haushaltungen eine sehr grosse Differenz zwischen dem minimalen und dem maximalen Wasserverbrauch besteht. Im weiteren hat diese Anlage den Vorteil, dass sie praktisch individuell der Verbrauchs-Charakteristik am Einsatzort angepasst werden kann, indem der Querschnitt der eingesetzten Flüssigkeitsbehandlungsgeräte und Ansprechdruck der jeweiligen Ventilvorrichtungen entsprechend ausgewählt werden.

In einer Variante dieser Ausführungsform sind mehrere gleich grosse Flüssigkeitsbehandlungsgeräte vorzusehen, wobei bei niedrigem Wasserverbrauch nur eines davon und bei steigendem Wasserverbrauch jeweils nach und nach ein zusätzliches Gerät durch das damit in Reihe geschaltete Ventil selbstätig in Funktion gesetzt wird.

Eine bevorzugte Ausführungsform der in der Anlage eingesetzten Ventilvorrichtung sieht unter anderem vor, dass die Länge der Feder, welche den Ventilkörper vorspannt, einem mehrfachen des Ventilkörperdurchmessers entspricht. Durch eine solche Ausgestaltung wird erreicht, dass die Kraft zum Bewegen des Ventilkörpers über einen weiten Bereich linear verläuft. Das wiederum bedeutet, dass bei einem hohen anstehenden Differenzdruck, bei dem auf der Eingangsseite der Ventilvorrichtung ein höherer Druck als auf der Ausgangsseite herrscht, der Ventilkörper eine grosse Einlassöffnung freigibt und dadurch eine entsprechende Flüssigkeitsmenge mit relativ geringem Druckabfall die Ventilvorrichtung durchströmen kann.

Bei einer weiteren Ausführungsform der Ventilvorrichtung sind Federvorspannscheiben vorgesehen, mittels welchen die eigentliche Vorspannkraft der Feder eingestellt werden kann. Durch solche Federvorspannscheiben kann die Vorspannkraft und damit der Grenzdruck genau vorherbestimmt werden. Dies hat den grossen Vorteil, dass der Ansprechdruck der Ventilvorrichtung sehr genau eingestellt werden kann, ohne dass die Ventilvorrichtung dafür kalibriert werden muss.

Nachfolgend werden anhand von Zeichnungen zwei verschiedene Ausführungsbeispiele der Flüssigkeitsaufbereitungsanlage sowie drei Ausführungsbeispiele von darin eingesetzten Ventilvorrichtung näher erläutert. In den Zeichnungen zeigen:
- Fig. 1: ein erstes, schematisches Beispiel einer erfindungsgemässen Flüssigkeitsaufbereitungsanlage;
- Fig. 2: ein zweites, schematisches Beispiel einer erfindungsgemässen Flüssigkeitsaufbereitungsanlage;
- Fig. 3: einen Längsschnitt durch eine erste Variante einer in einer erfindungsgemässen Flüssigkeitsaufbereitungsanlage eingesetzten Ventilvorrichtung;
- Fig. 4: einen Längsschnitt durch eine zweite Variante der Ventilvorrichtung, und
- Fig. 5: einen Längsschnitt durch eine dritte Variante der Ventilvorrichtung.

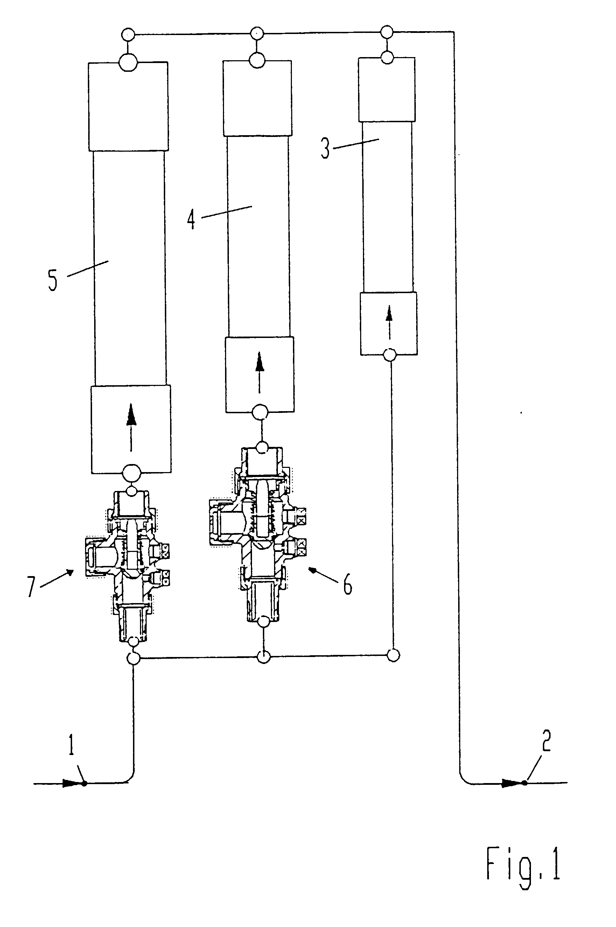

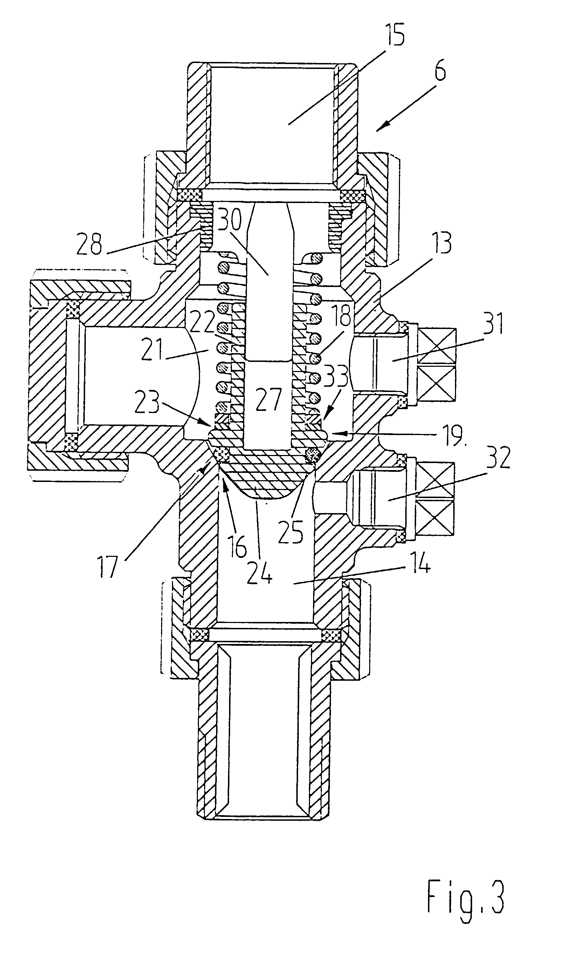

Fig. 1 zeigt schematisch ein erstes Ausführungsbeispiel einer Flüssigkeitsaufbereitungsanlage. Drei Wasserbehandlungsgeräte 3, 4, 5 mit unterschiedlichen Nenngrössen sind zueinander parallel geschaltet. Es versteht sich, dass, wie schon erwähnt, auch drei gleich grosse Wasserbehandlungsgeräte zum Einsatz kommen können. Die Flüssigkeitsbehandlungsgeräte 3, 4, 5 können beispielsweise Entkalkungsgeräte zum Enthärten von Wasser sein. Zwei dieser Geräte 4, 5 liegen dabei in Reihe mit je einer Ventilvorrichtung 6, 7. Die Ventilvorrichtungen 6, 7 weisen, wie aus Fig. 3 deutlicher ersichtlich ist, ein Gehäuse 13 mit einem Einlassraum 14 und einem Auslassraum 15 auf, wobei zwischen dem Einlassraum 14 und dem Auslassraum 15 ein Ventilsitz 17 angeordnet ist, der durch einen von einer Spiralfeder 18 vorgespannten Ventilkörper 19 verschliessbar ist, wobei der Ventilkörper 19 durch einen vorbestimmbaren Differenzdruck zwischen dem Eingang 1 bzw. dem Einlassraum 14 und dem Ausgang 2 bzw. dem Auslassraum 15, entgegen der Vorspannkraft der Feder 18, verschiebbar ist. Die Ventilkörper 19 in den Ventilvorrichtungen 6, 7 sind dabei mit unterschiedlichen Kräften vorgespannt.

Die Funktionsweise der Flüssigkeitsaufbereitungsanlage stellt sich wie folgt dar:
Das Gerät 3 zur Behandlung der Flüssigkeit besitzt eine bestimmte Nenngrösse und dadurch einen definierten Querschnitt. Bei geschlossenen Ventilvorrichtungen 6, 7 ist dieser Querschnitt proportional zu einer bestimmten Flüssigkeitsmenge, die pro Zeiteinheit das Gerät 3 durchströmt und somit massgebend für einen bestimmten Druckabfall zwischen Einlass und Auslass des Geräts. Dieser Druckabfall ist gleichzeitig proportional zur entstehenden Druckdifferenz zwischen Eingang 1 und Ausgang 2 der Anlage. Solange die durch den Differenzdruck der Flüssigkeit auf die Vorderseite des parallel zum Gerät 3 liegenden Ventilkörpers 19 der Ventilvorrichtung 6 ausgeübte Kraft kleiner als die Vorspannkraft der Feder 18 ist, liegt der Ventilkörper 19 am Ventilsitz 17 auf, so dass die Ventilvorrichtung 6 als geschlossen anzusehen ist.

Steigt nun der Flüssigkeitsverbrauch an, so steigt auch der Druckabfall im Gerät 3 an. Somit besteht natürlich auch zwischen dem Eingang 1 und dem Ausgang 2 der Anlage eine entsprechende Druckdifferenz. Durch diesen Druckunterschied steigt auch die auf der Einlaßseite der Ventilvorrichtung 6 durch die Flüssigkeit auf den Ventilkörper 19 ausgeübte Kraft kontinuierlich an. Wird dabei ein bestimmter Grenzwert überschritten, so wird der Ventilkörper 19 entgegen der Vorspannkraft der Feder 18 verschoben und somit bezüglich des Flüssigkeitsbehandlungsgeräts 3 eine weitere Leitung freigegeben. Das bedeutet, dass bei Erreichen einer bestimmten Durchflussmenge und dadurch eines bestimmten Druckabfalls im Gerät 3 zunächst die eine Ventilvorrichtung 6 öffnet und parallel zum Gerät 3 das Gerät 4 von der Flüssigkeit durchströmt wird.

Steigt nun der Flüssigkeitsverbrauch weiter an, so steigt dadurch natürlich auch der Differenzdruck zwischen Eingang und Ausgang der Anlage weiter an, so dass ab einem bestimmten Flüssigkeitsverbrauch auch die Ventilvorrichtung 7 öffnet und das Gerät 5 damit ebenfalls von der Flüssigkeit durchströmt wird.

Eine solchermassen ausgebildete Anlage hat den grossen Vorteil, dass unabhängig vom Flüssigkeitsverbrauch ein guter Wirkungsgrad gewährleistet ist, da die Nenngrössen der einzelnen Geräte 3, 4, 5 und die Ansprechkräfte der Ventilvorrichtungen 6, 7, individuell auf die Charakteristik der entsprechenden Anlage abgestimmt werden können. Das hier aufgezeigte Ausführungsbeispiel eignet sich insbesondere auch für Hauswasseranlagen, da in Hauswasseranlagen, beispielsweise während der Nacht, oft nur einer von Dutzenden von Wasser-Verbrauchern eingeschaltet ist.

Diese vorgängig erläuterte Anlage stellt kein ausschliessliches Ausführungsbeispiel dar. Bei Anlagen, die während eines Grossteils der Zeit einen bestimmten Flüssigkeitsverbrauch nicht unterschreiten, beispielsweise in Produktionsanlagen, kann das direkt an der Zuleitung angeschlossene Wasserbehandlungsgerät so dimensioniert sein, dass es eine auf diesen Norm-Verbrauch abgestimmte Nenngrösse aufweist, und dass die anderen Geräte lediglich der Abdeckung eines allfälligen Spitzenbedarfs dienen. Eine solche Anordnung bewirkt, dass von einem mittleren bis zu einem hohen Flüssigkeitsverbrauch ein hoher Wirkungsgrad gewährleistet ist.

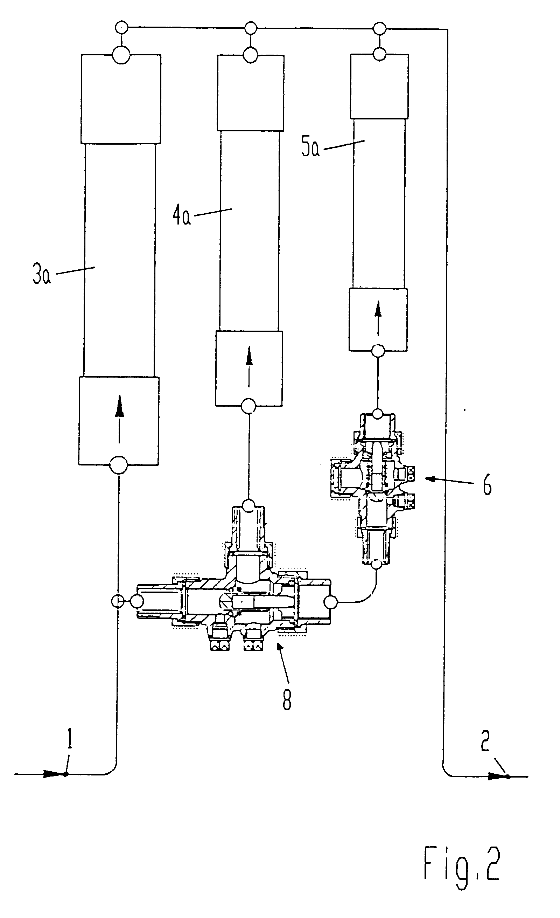

Aus der Fig. 2 ist eine weitere Variante einer Flüssigkeitsaufbereitungsanlage sichtbar. Diese Anlage weist wiederum drei parallel geschaltete Geräte 3a, 4a, 5a zum Behandeln der Flüssigkeit sowie zwei in Reihe dazu geschaltete Ventilvorrichtungen 6, 8 auf. Sie unterscheidet sich gegenüber der in Fig. 1 beschriebenen Variante hauptsächlich dadurch, dass die eine Ventilvorrichtung 6 am Ausgang der anderen Ventilvorrichtung 8 angeschlossen ist, und dass das Gerät 3a mit dem grössten Querschnitt direkt am Eingang der Anlage angeschlossen ist. Durch eine solche Beschaltung der Ventilvorrichtungen können diese gleiche Ansprechkräfte bezüglich der Ventilkörper aufweisen. Damit die nachgeschaltete Ventilvorrichtung 6 anspricht, muss in etwa die doppelte Druckdifferenz, die zum Ansprechen der ersten Ventilvorrichtung 8 nötig ist, herrschen.

Fig. 3 zeigt eine Variante einer in der erfindungsgemässen Flüssigkeitsbehandlungsanlage eingesetzten Ventilvorrichtung 6 im Längsschnitt. Wie bereits erwähnt, weist die Ventilvorrichtung 6 im wesentlichen ein Gehäuse 13 mit einem Einlassraum 14 und einem Auslassraum 15, sowie einen von einer Feder 18 vorgespannten Ventilkörper 19 auf, welcher von der Feder 18 gegen einen Ventilsitz 17 gedrückt wird. Zwischen dem Einlassraum 14 und dem Auslassraum 15 ist ein Ventilraum 21 angeordnet, der im Durchmesser grösser als der Einlassraum 14 ausgebildet ist. Der Übergang vom Einlassraum 14 zum Ventilraum 21 ist abgeschrägt und bildet den Ventilsitz 17. Der Ventilkörper 19 besteht aus einem im wesentlichen zylindrisch ausgebildeten, dem Auslassraum 15 zugewandten Hinterteil 22 und einem von einer radialen Basisfläche 23 ausgehenden, im Querschnitt ballig abnehmenden, dem Einlassraum 14 zugewandten Vorderteil 24 mit einer umlaufenden Dichtlippe 25. In den Hinterteil 22 des Ventilkörpers 19 ist eine Sack-Bohrung 27 eingelassen. Im Bereich des Auslassraums 15 ist ein Einsatz 28 in das Gehäuse 13 eingesetzt. An diesem Einsatz 28 ist ein Fortsatz 30 angebracht, der in Richtung des Einlassraums 14 absteht, mit der Bohrung 27 des Ventilkörpers 19 in Lage und Durchmesser korrespondiert und als Führung und Anschlag für den verschiebbaren Ventilkörper 19 ausgebildet ist. Im weiteren besitzt die Ventilvorrichtung 6 noch zwei Meßstopfen 31, 32, die bezüglich der Längsausdehnung der Ventilvorrichtung 6 radial wegführen, wobei der eine Meßstopfen 32 vom Einlassraum 14 und der andere vom Ventilraum 21 ausgeht und nach aussen aus dem Gehäuse 13 führen. Die Feder 18 ist zwischen der radialen Basisfläche 23 des Ventilkörpers 6 und dem Einsatz 28 eingespannt. Um die Vorspannkraft der Feder 18 zu verändern, sind Federvorspannscheiben 33 unterschiedlicher Dicke vorgesehen, die zwischen die radiale Basisfläche 23 und die Feder 18 eingesetzt werden.

Die Funktionsweise von solchen Ventilvorrichtungen ist hinlänglich bekannt, so dass auf eine detaillierte Beschreibung verzichtet werden kann. Da die Länge der Feder 18 einem Mehrfachen des Ventilkörperdurchmessers entspricht, wird ein linearer Kraftanstieg beim Verschieben des Ventilkörpers 19 erreicht und dadurch eine grosse Durchlassöffnung 16 in der Ventilvorrichtung 6 bei ansteigender Druckdifferenz freigegeben. Durch einen im Vergleich zum Einlassraum 14 vergrösserten Ventilraum 21 wird dies zudem begünstigt.

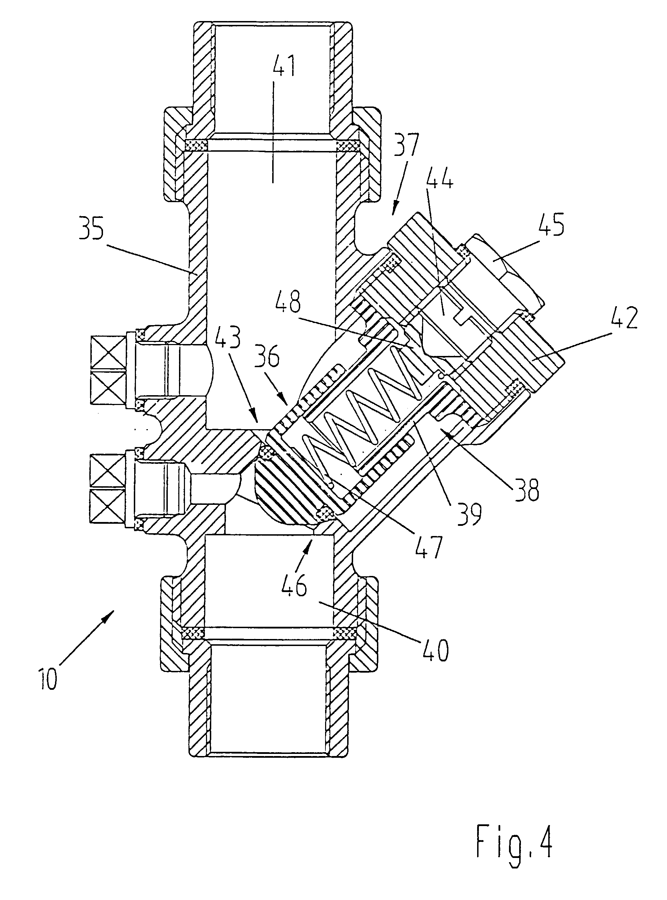

Fig. 4 zeigt in einem Längsschnitt eine zweite Ausführungsform einer Ventilvorrichtung 10. Da diese Ventilvorrichtung 10 von der Funktion her weitgehend mit dem vorgängigen Ausführungsbeispiel Fig. 3 identisch ist, wird nachfolgend nur auf die wesentlichen Unterschiede eingegangen. Die Ventilvorrichtung weist wiederum einen Einlassraum 40, einen Auslassraum 41 und einen den Durchlass 43 mit einer bestimmten Kraft verschliessenden Ventilkörper 36 auf. Das Hauptunterscheidungsmerkmal dieses Ausführungsbeispiels gegenüber dem vorhergehenden ist, dass der Ventilkörper 36 schräg in das Gehäuse 35 eingesetzt ist. Dazu weist das Gehäuse 35 einen Ansatz 37 auf, der gegenüber der Längsausdehnung der Ventilvorrichtung 10 schräg angebracht ist. In diesen Ansatz 37 ist ein Einsatz 38 eingesetzt, von welchem ein zylindrisch ausgebildeter Fortsatz 39 in Richtung des Einlassraums 40 absteht. Der Ventilkörper 36 weist einen abgerundeten Vorderteil und einen zylindrischen Hinterteil mit einer Sack-Bohrung auf. Diese Sack-Bohrung ist korrespondierend zum Fortsatz 39 ausgebildet, so dass der Ventilkörper 36 am Fortsatz 39 geführt wird. Der Einsatz 38 wird durch einen in den Ansatz 37 einschraubbaren Deckel 42 in seiner Lage fixiert. Dieser Deckel 42 besitzt eine zentrale Bohrung mit einem Gewinde, in welches ein Gewindestift 44 eingeschraubt ist. Im Innern weist die Ventilvorrichtung 10 einen an den Einlassraum 40 angrenzenden Bund 42 auf. Dieser Bund 42 bildet bezüglich des durchfliessenden Mediums eine Einschnürung und weist eine korrespondierend zum Ventilkörper 36 als Ventilsitz ausgebildete Fase 46 auf.

Der Ventilkörper 36 wird von einer vorgespannten Feder 47 gegen den Ventilsitz 46 gedrückt. Diese Feder 47 ist zwischen dem Boden der Sack-Bohrung des Ventilkörpers 36 und dem Gewindestift 44 eingespannt. Um eine sichere Kraftübertragung vom Gewindestift 44 auf die Feder 47 zu gewährleisten, ist zwischen dem Gewindestift 44 und der Feder 47 noch ein Übertragungselement 48 eingeschoben. Vorteilhaft an einer solchen Ausbildung der Ventilvorrichtung 10 ist, dass die Vorspannkraft der Feder 47 mittels des Gewindestifts 44 von aussen eingestellt werden kann. Um ein versehentliches Verstellen der Vorspannkraft der Feder 47 zu verhindern, ist hinter dem Gewindestift 44 zudem eine Kappe 45 in das Gewinde eingeschraubt.

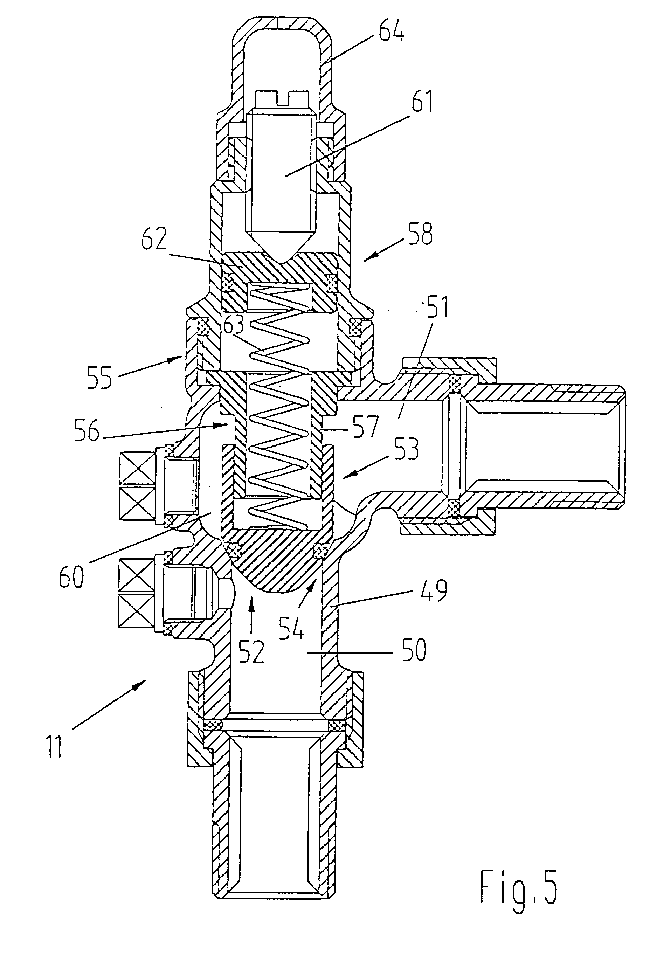

Fig. 5 zeigt ein drittes Ausführungsbeispiel einer Ventilvorrichtung 11, welche ebenfalls einen Einlassraum 50, einen Auslassraum 51 sowie einen von einem Ventilkörper 53 verschliessbaren Durchlass 52 aufweist. Der Hauptunterschied gegenüber den beiden vorgängig beschriebenen Ventilvorrichtungen besteht darin, dass der Auslassraum 51 gegenüber dem Einlassraum 52 im Winkel um 90° versetzt angeordnet ist. Das Gehäuse 49 weist einen fluchtend zum Einlassraum 50 angebrachten Ansatz 55 mit einem Innengewinde auf. Ein Einsatz 56 mit einem gegen den Einlassraum 50 abstehenden, zylindrisch ausgebildeten Fortsatz 57 ist in diesen Ansatz 55 eingesetzt. Ein in das Gewinde des Ansatzes 55 einschraubbarer Aufsatz 58 fixiert mit seiner Stirnfläche den Einsatz 56. An dem Einlassraum 50 und dem Auslassraum 51 ist ein im Querschnitt gegenüber den angrenzenden Räumen 50, 51 etwas erweiterter Ventilraum 60 vorhanden, wobei am Übergang vom Einlassraum 50 zum Ventilraum 60 durch eine umlaufende Fase 54 der Ventilsitz gebildet wird. Der Ventilkörper 53 besteht aus einem abgerundeten Vorderteil und einem zylindrisch ausgebildeten Hinterteil mit eingelassener SackBohrung. Der Fortsatz 57 des Einsatzes 56 ist in der Form korrespondierend mit der Sack-Bohrung des Ventilkörpers 53 ausgebildet und dient der Führung desselben. Der Aufsatz 58 weist auf seiner Rückseite ein Gewinde auf, in welches ein Gewindestift 61 eingeschraubt ist, der über eine Tellerscheibe 62 die zwischen dem Boden der Sack-Bohrung und dieser Tellerscheibe 62 eingebrachte Feder 63 vorspannt. Der Ventilkörper 53 wird dadurch gegen den Ventilsitz 54 gedrückt. Um die Vorspannkraft der Feder gegen versehentliches Verstellen zu schützen, ist am Aufsatz 58 eine Kappe 64 aufgeschraubt.

Im weiteren sind auch Ventilvorrichtungen vorgesehen, welche, wie in Fig. 1 dargestellt, mehrere Auslässe aufweisen können. Ebenso sind natürlich auch Varianten mit mehreren Einlässen denkbar.

## Patentansprüche

1. Flüssigkeitsaufbereitungsanlage mit einem Eingang (1) und einem Ausgang (2), wobei zwischen dem Eingang (1) und dem Ausgang (2) n Geräte (3, 4, 5; 3a, 4a, 5a) zur Behandlung der Flüssigkeit parallel zueinander angeordnet sind, und wobei nur n-1 der n Flüssigkeitsbehandlungsgeräte (4, 5; 4a 5a) jeweils eine in Reihe zu dem/den Flüssigkeitsbehandlungsgerät(en) (4, 5; 4a 5a) geschaltete Ventilvorrichtung (6, 7; 6, 8) mit je einem Ventilkörper (19, 36, 53) aufweist/aufweisen, wobei die Ventilvorrichtung(en) (6, 7; 6, 8) als hydraulisch durch die zu behandelnde Flüssigkeit betätigbare(r) Grenzwertschalter ausgebildet ist/sind, welche(r) bei Überschreiten eines vorbestimmbaren Differenzdrucks zwischen Eingang (1) und Ausgang (2), durch die Kraft, welche die Flüssigkeit auf den jeweiligen Ventilkörper (19, 36, 53) ausübt, einen Durchlass (16, 43, 52) öffnet/öffnen, so dass das zugehörige Flüssigkeitsbehandlungsgerät (4, 5; 4a, 5a) in Abhängigkeit des Flüssigkeitsverbrauchs bzw. des anstehenden Flüssigkeitsdifferenzdrucks selektiv ansteuerbar ist.

2. Flüssigkeitsaufbereitungsanlage nach Anspruch 1, dadurch gekennzeichnet, dass die Flüssigkeitsbehandlungsgeräte (3, 4, 5; 3a, 4a, 5a) unterschiedliche Nenngrössen aufweisen, so daß sie für unterschiedliche Durchflußmengen ausgelegt sind.

3. Flüssigkeitsaufbereitungsanlage nach Anspruch 1 oder 2, dadurch gekennzeichnet, dass die Flüssigkeitsbehandlungsgeräte (3, 3a, 4, 4a, 5, 5a) als gleichartig wirkende Geräte ausgebildet sind.

4. Flüssigkeitsaufbereitungsanlage nach einem der vorhergehenden Ansprüche, dadurch gekennzeichnet, dass die Geräte (3, 3a, 4, 4a, 5, 5a) zur Behandlung der Flüssigkeit als Geräte zur Reduktion der Härte der Flüssigkeit, insbesondere zur Reduktion der Wasserhärte, ausgebildet sind.

5. Flüssigkeitsaufbereitungsanlage nach Anspruch 4, dadurch gekennzeichnet, dass die Geräte (3, 3a, 4, 4a, 5, 5a) Magnete zum Behandeln der Flüssigkeit aufweisen.

6. Flüssigkeitsaufbereitungsanlage nach einem der vorhergehenden Ansprüche, dadurch gekennzeichnet, dass beim Einsatz von mehreren Ventilvorrichtungen (6, 8) zumindest eine davon an der Auslaßseite einer anderen Ventilvorrichtung (8) angeschlossen ist.

7. Flüssigkeitsaufbereitungsanlage nach einem der vorhergehenden Ansprüche, dadurch gekennzeichnet, dass die Ventilvorrichtung (6, 10, 11) einen Einlassraum (14, 40, 50) und einen Auslassraum (15, 41, 51) aufweist, dass zwischen dem Einlassraum (14, 40, 50) und dem Auslassraum (15, 41, 51) ein Ventilsitz (17, 46, 54) angeordnet ist, der durch einen von einer Spiralfeder (18, 47, 63) vorgespannten Ventilkörper (19, 36, 53) verschliessbar ist, wobei der Ventilkörper (19, 36, 53) durch einen vorbestimmbaren Flüssigkeitsdifferenzdruck zwischen Einlassraum (14, 40, 50) und Auslassraum (15, 41, 51) entgegen der Vorspannkraft der Feder (18, 47, 63) verschiebbar ist, und dass Mittel (33, 44, 61) zum Einstellen der Vorspannkraft der Feder (18, 47, 63) vorgesehen sind.

8. Flüssigkeitsaufbereitungsanlage nach Anspruch 7, dadurch gekennzeichnet, dass die Länge der Spiralfeder (18, 63), im geschlossenen Zustand der Ventilvorrichtung (6, 11), einem Mehrfachen des Ventilkörperdurchmessers entspricht.

9. Flüssigkeitsaufbereitungsanlage nach Anspruch 7 oder 8, dadurch gekennzeichnet, dass der maximale Verschiebeweg des Ventilkörpers (19) zumindest einem Viertel des grössten Ventilkörperdurchmessers entspricht.

10. Flüssigkeitsaufbereitungsanlage nach einem der Ansprüche 7 bis 9, dadurch gekennzeichnet, dass der Ventilkörper (19, 36, 53) der Ventilvorrichtung (6, 10, 11) einen im wesentlichen zylindrisch ausgebildeten, dem Auslassraum (15, 41, 51) zugewandten Hinterteil (22) und einen im Querschnitt ballig abnehmenden, dem Einlassraum (14, 40, 50) zugewandten Vorderteil (24) aufweist.

11. Flüssigkeitsaufbereitungsanlage nach Anspruch 10, dadurch gekennzeichnet, dass der Ventilkörper (19) zwischen dem Vorderteil (24) und dem Hinterteil (22) einer radiale Basisfläche (23) aufweist.

12. Flüssigkeitsaufbereitungsanlage nach Anspruch 10 oder 11, dadurch gekennzeichnet, dass die Ventilvorrichtung (6, 10, 11) einen auslaßseitigen Einsatz (28, 38, 56) aufweist, von welchem ein im wesentlichen zylindrisch ausgebildeter Fortsatz (30, 39, 57) in Richtung des Einlassraums (14, 40, 50) ausgeht, und dass in den Hinterteil (22) des Ventilkörpers (19) eine Bohrung (27) eingelassen ist, welche in Form und Lage mit dem Fortsatz (30, 39, 57) korrespondiert.

13. Flüssigkeitsaufbereitungsanlage nach Anspruch 11 oder 12, dadurch gekennzeichnet, dass die Feder (18, 47, 63) zwischen dem Einsatz (28) und der radialen Basisfläche (23) oder zwischen dem Einsatz (38, 56) und dem Boden der im Hinterteil des Ventilkörpers (36, 53) angebrachten Bohrung eingespannt ist.

14. Flüssigkeitsaufbereitungsanlage nach einem der Ansprüche 7 bis 13, dadurch gekennzeichnet, dass die Ventilvorrichtung (10, 11) einen einschraubbaren Deckel (42) bzw. Aufsatz (58) zum Abstützen der Feder (47, 63) und/oder zum Einstellen der Vorspannkraft der Feder (47, 63) durch Mittel (44, 61) aufweist, wobei die Zentralachse des Deckels (42) bzw. des Aufsatzes (58) mit der Längsachse des Auslassraums (41, 51) einen Winkel einschliesst.

15. Flüssigkeitsaufbereitungsanlage nach Anspruch 14, dadurch gekennzeichnet, dass die Längsachse des Auslassraums (51) mit der Längsachse des Einlassraums (50) einen Winkel von zumindest annähernd 90° einschliesst,

16. Flüssigkeitsaufbereitungsanlage nach Anspruch 13, dadurch gekennzeichnet, dass die Mittel der Ventilvorrichtung (6) zum Einstellen der Federvorspannkraft Federvorspannscheiben (33) unterschiedlicher Dicke sind, welche zwischen der radialen Basisfläche (23) des Ventilkörpers (19) und der Feder (18) anbringbar sind.

17. Flüssigkeitsaufbereitungsanlage nach Anspruch 10, dadurch gekennzeichnet, dass die Ventilvorrichtung mehrere Einlässe und/oder Auslässe aufweist.

## Claims

1. An installation for the treatment of liquids, with an intake (1) and an outlet (2), in which arrangement there are arranged between the intake (1) and the outlet (2) and parallel to each other n appliances (3, 4, 5; 3a, 4a, 5a) for the treatment of the liquid, and in which arrangement only n-1 of the n liquid treatment appliances (4, 5; 4a 5a) has or have in each case a valve device (6, 7; 6, 8) disposed in series with the liquid treatment appliance or appliances (4, 5; 4a, 5a) with one valve body (19, 36, 53) each, in which arrangement the valve device or devices (6, 7; 6, 8) is or are designed as a limit switch or switches, to be hydraulically actuated by the liquid to be treated, which opens or open a passage (16, 43, 52) when a predetermined differential pressure between the intake (1) and the outlet (2) is exceeded, due to the force which the liquid exerts on the respective valve body (19, 36, 53), so that the associated liquid treatment appliance (4, 5; 4a, 5a) can be selectively actuated according to the consumption of the liquid or the existing differential pressure of the liquid.

2. An installation for the treatment of liquids according to claim 1, characterized in that the liquid treatment appliances (3, 4, 5; 3a; 4a, 5a) have different rated values, so that they are designed for different throughput quantities.

3. An installation for the treatment of liquids according to claim 1 or 2, characterized in that the liquid treatment appliances (3, 3a, 4, 4a, 5, 5a) are designed as appliances operating in the same manner.

4. An installation for the treatment of liquids according to one of the preceding claims, characterized in that the appliances (3, 3a, 4, 4a, 5, 5a) for the treatment of the liquid are designed as appliances for reducing the hardness of the liquid, in particular for reducing the hardness of water.

5. An installation for the treatment of liquids according to claim 4, characterized in that the appliances (3, 3a, 4, 4a, 5, 5a) have magnets for the treatment of the liquid.

6. An installation for the treatment of liquids according to one of the preceding claims, characterized in that in the case where several valve devices (6, 8) are used, at least one thereof is connected to the outlet side of a different valve device (8).

7. An installation for the treatment of liquids according to one of the preceding claims, characterized in that the valve device (6, 10, 11) has an intake compartment (14, 40, 50) and an outlet compartment (15, 41, 51), that between the intake compartment (14, 40, 50) and the outlet compartment (15, 41, 51), there is arranged a valve seat (17, 46, 54) which can be closed by a valve body (19, 36, 53) that is prestressed by a coil spring (18, 47, 63), in which arrangement the valve body (19, 36, 53) can be displaced by a predeterminable differential pressure of the liquid between the intake compartment (14, 40, 50) and the outlet compartment (15, 41, 51) against the prestressing force of the spring (18, 47, 63), and that means (33, 44, 61) are provided for setting the prestressing force of the spring (18, 47, 63).

8. An installation for the treatment of liquids according to claim 7, characterized in that the length of the coil spring (18, 63) corresponds in the closed state of the valve device (6, 11) to a multiple of the diameter of the valve body.

9. An installation for the treatment of liquids according to claim 7 or 8, characterized in that the maximum displacement path of the valve body (19) corresponds to at least a quarter of the largest diameter of the valve body.

10. An installation for the treatment of liquids according to one of claims 7 to 9, characterized in that the valve body (19, 36, 53) of the valve device (6, 10, 11) has a substantially cylindrical rear portion (22) facing the outlet compartment (15, 41, 51) and a front portion (24), the cross-section whereof decreases in the manner of a ball, which faces the intake compartment (14, 40, 50).

11. An installation for the treatment of liquids according to claim 10, characterized in that the valve body (19) has a radial base area (23) between the front portion (24) and the rear portion (22).

12. An installation for the treatment of liquids according to claim 10 or 11, characterized in that the valve device (6, 10, 11) has on the outlet side an insert (28, 38, 56) from which a substantially cylindrical extension (30, 39, 57) starts in the direction towards the intake compartment (14, 40, 50), and that into the rear portion (22) of the valve body (19,) there has been let in a bore (27) which corresponds in shape and position to the extension (30, 39, 57).

13. An installation for the treatment of liquids according to claim 11 or 12, characterized in that the spring (18, 47, 63) is inserted between the insert (28) and the radial base area (23) or between the insert (38, 56) and the bottom of the bore arranged in the rear portion of the valve body (36, 53).

14. An installation for the treatment of liquids according to one of claims 7 to 13, characterized in that the valve device (10, 11) has a lid (42) or a headpiece (58) for supporting the spring (47, 63), and/or for setting the prestressing force of the spring (47, 63) by means (44, 61), in which arrangement the central axis of the lid (42) or of the headpiece (58) forms an angle with the longitudinal axis of the outlet compartment (41, 51).

15. An installation for the treatment of liquids according to claim 14, characterized in that the longitudinal axis of the outlet compartment (51) forms an angle of at least approximately 90° with longitudinal axis of the intake compartment (50).

16. An installation for the treatment of liquids according to claim 13, characterized in that the means of the valve device (6) for adjusting the prestressing force of the spring are prestressing disks (33) of different thicknesses which can be arranged between the radial base area (23) of the valve body (19) and the spring (18).

17. An installation for the treatment of liquids according to claim 10, characterized in that the valve device has several intakes and/or outlets.

## Revendications

1. Installation de traitement de liquide avec une entrée (1) et une sortie (2), n appareils (3, 4, 5; 3a, 4a, 5a) étant disposés en parallèle entre eux entre l'entrée (1) et la sortie (2) pour le traitement du liquide, et seulement n-1 des n appareils de traitement de liquide (4, 5; 4a 5a) présentant respectivement un dispositif de soupape (6, 7; 6, 8) monté en série par rapport à l'appareil (aux appareils) de traitement de liquide (4, 5; 4a 5a) et équipé chacun d'un corps de soupape (19, 36, 53), le(s) dispositif(s) de soupape (6, 7; 6, 8) étant conçu(s) comme un (des) commutateur(s) de valeur limite pouvant être actionné(s) hydrauliquement par le liquide à traiter, lequel (lesquels) ouvre(nt) un passage (16, 43, 52) par la force que le liquide exerce sur le corps de soupape (19, 36, 53) respectif, lors du dépassement d'une pression différentielle prédéterminable entre l'entrée (1) et la sortie (2), de sorte que l'appareil de traitement de liquide (4, 5; 4a, 5a) correspondant peut être commandé de façon sélective en fonction de la consommation de liquide et/ou de la pression différentielle de liquide en formation.

2. Installation de traitement de liquide selon la revendication 1, caractérisée en ce que les appareils de traitement de liquide (3, 4, 5; 3a, 4a, 5a) présentent des grandeurs nominales différentes, de sorte qu'ils sont conçus pour des débits différents.

3. Installation de traitement de liquide selon la revendication 1 ou 2, caractérisée en ce que les appareils de traitement de liquide (3, 3a, 4, 4a, 5, 5a) sont réalisés comme des appareils ayant un effet similaire.

4. Installation de traitement de liquide selon l'une quelconque des revendications précédentes, caractérisée en ce que les appareils (3, 3a, 4, 4a, 5, 5a) pour le traitement du liquide sont réalisés comme des appareils pour la réduction de la dureté du liquide, en particulier pour la réduction de la dureté de l'eau.

5. Installation de traitement de liquide selon la revendication 4, caractérisée en ce que les appareils (3, 3a, 4, 4a, 5, 5a) présentent des aimants pour le traitement du liquide.

6. Installation de traitement de liquide selon l'une quelconque des revendications précédentes, caractérisée en ce que, si l'on utilise plusieurs dispositifs de soupape (6, 8), au moins l'une d'entre elles est raccordée au côté sortie d'un autre dispositif de soupape (8).

7. Installation de traitement de liquide selon l'une quelconque des revendications précédentes, caractérisée en ce que le dispositif de soupape (6, 10, 11) présente un espace d'entrée (14, 40, 50) et un espace de sortie (15, 41, 51), en ce qu'entre l'espace d'entrée (14, 40, 50) et l'espace de sortie (15, 41, 51) est disposé un siège de soupape (17, 46, 54) qui peut être fermé par un corps de soupape (19, 36, 53) prétendu par un ressort spiral (18, 47, 63), le corps de soupape (19, 36, 53) pouvant être déplacé par une pression différentielle de liquide prédéterminable entre l'espace d'entrée (14, 40, 50) et l'espace de sortie (15, 41, 51) dans le sens contraire à la force de prétension du ressort (18, 47, 63), et en ce que des moyens (33, 44, 61) sont prévus pour le réglage de la force de prétension du ressort (18, 47, 63).

8. Installation de traitement de liquide selon la revendication 7, caractérisée en ce que la longueur du ressort spiral (18, 63) correspond, lorsque le dispositif de soupape (6, 11) est fermé, à un multiple du diamètre du corps de soupape.

9. Installation de traitement de liquide selon la revendication 7 ou 8, caractérisée en ce que le trajet de déplacement maximum du corps de soupape (19) correspond à au moins un quart du plus grand diamètre du corps de soupape.

10. Installation de traitement de liquide selon l'une quelconque des revendications 7 à 9, caractérisée en ce que le corps de soupape (19, 36, 53) du dispositif de soupape (6, 10, 11) présente une partie arrière (22) de conception sensiblement cylindrique et tournée vers l'espace de sortie (15, 41, 51) et une partie avant (24) diminuant dans la section avec une forme bombée et tournée vers l'espace d'entrée (14, 40, 50).

11. Installation de traitement de liquide selon la revendication 10, caractérisée en ce que le corps de soupape (19) présente une surface de base (23) radiale entre la partie avant (24) et la partie arrière (22).

12. Installation de traitement de liquide selon la revendication 10 ou 11, caractérisée en ce que le dispositif de soupape (6, 10, 11) présente un élément d'insertion (28, 38, 56) côté sortie duquel part un appendice (30, 39, 57) de forme sensiblement cylindrique en direction de l'espace d'entrée (14, 40, 50) et en ce que dans la partie arrière (22) du corps de soupape (19) est encastré un alésage (27) qui correspond en forme et position à l'appendice (30, 39, 57).

13. Installation de traitement de liquide selon la revendication Il ou 12, caractérisée en ce que le ressort (18, 47, 63) est tendu entre l'élément d'insertion (28) et la surface de base (23) radiale ou entre l'élément d'insertion (38, 56) et le fond de l'alésage disposé dans la partie arrière du corps de soupape (36, 53).

14. Installation de traitement de liquide selon l'une quelconque des revendications 7 à 13, caractérisée en ce que le dispositif de soupape (10, 11) présente un couvercle (42) vissable ou un chapeau (58) pour supporter le ressort (47, 63) et/ou pour régler la force de prétension du ressort (47, 63) par des moyens (44, 61), l'axe central du couvercle (42) ou du chapeau (58) formant un angle avec l'axe longitudinal de l'espace de sortie (41, 51).

15. Installation de traitement de liquide selon la revendication 14, caractérisée en ce que l'axe longitudinal de l'espace de sortie (51) forme un angle d'au moins approximativement 90° avec l'axe longitudinal de l'espace d'entrée (50).

16. Installation de traitement de liquide selon la revendication 13, caractérisée en ce que les moyens du dispositif de soupape (6) pour le réglage de la force de prétension sont des disques de prétension de ressort (33) d'épaisseur différente qui peuvent être placés entre la surface de base (23) radiale du corps de soupape (19) et le ressort (18).

17. Installation de traitement de liquide selon la revendication 10, caractérisée en ce que le dispositif de soupape présente plusieurs entrées et/ou sorties.
